Europäisches Patentamt

European Patent Office

Office européen des brevets

(19)

(11) **EP 1 398 866 A1**

(12) **DEMANDE DE BREVET EUROPEEN**

(43) Date de publication:
**17.03.2004 Bulletin 2004/12**

(51) Int Cl.⁷: **H02M 3/07**

(21) Numéro de dépôt: **03102738.6**

(22) Date de dépôt: **12.09.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **16.09.2002 FR 0211436**

(71) Demandeur: **COMMISSARIAT A L'ENERGIE ATOMIQUE**
**75752 Paris Cedex 15 (FR)**

(72) Inventeurs:
• **Rostaing, Jean-Pierre**
**38260, La Cote-Saint-André (FR)**

• **Villard, Patrick**
**38100, Grenoble (FR)**
• **Du Port de Poncharra, Jean**
**38950, Quaix en Chartreuse (FR)**
• **Ouvrier-Buffet, Patrice**
**74410, Saint-Jorioz (FR)**

(74) Mandataire: **Poulin, Gérard**
**Société BREVATOME**
**3, rue du Docteur Lancereaux**
**75008 Paris (FR)**

(54) **Pompe de charges à injection de charges**

(57) L'invention concerne une pompe de charges.

La pompe de charges comprend n cellules en série, chaque cellule comprenant une capacité de décalage (Cdi) et une capacité de mémorisation (Cmi), présentant, respectivement, une capacité parasite de décalage (Cpi) et une capacité parasite de mémorisation (Cqi). La présence des capacités parasites (Cpi, Cqi) conduit à une perte des charges transmises à la cellule. Chaque cellule comprend des moyens d'injection de charges (Cdinji, Cminji) pour compenser, de façon partielle ou totale, voire sur-compenser, la quantité des charges perdues.

La pompe de charges selon l'invention trouve une application particulièrement avantageuse quand elle est réalisée en technologie silicium sur isolant.

FIG. 5

EP 1 398 866 A1

## Description

<u>Domaine technique et art antérieur</u>

L'invention concerne une pompe de charges.

Une pompe de charges est un dispositif électronique à transfert de charges permettant d'augmenter la valeur absolue d'un potentiel électrique. C'est un convertisseur continu-continu qui fournit une tension continue à partir d'une source basse tension continue commutée.

Les pompes de charges sont utilisées dans des applications à faible puissance, typiquement inférieure à 1W. Elles se rencontrent, par exemple, dans les élévateurs de tension (doubleurs de tension, tripleurs de tension, etc.), les inverseurs de tension à basse puissance, les blocs THT de télévision (10-20kV), les convertisseurs continu/continu en éléments discrets, les circuits intégrés pour téléphone mobile (circuits EEPROM (EEPROM pour « Electrically Erasable Programmable Read-Only Memory »)), etc. Les convertisseurs électromagnétiques (transformateurs) les remplacent pour les puissances élevées, typiquement supérieures à 1W.

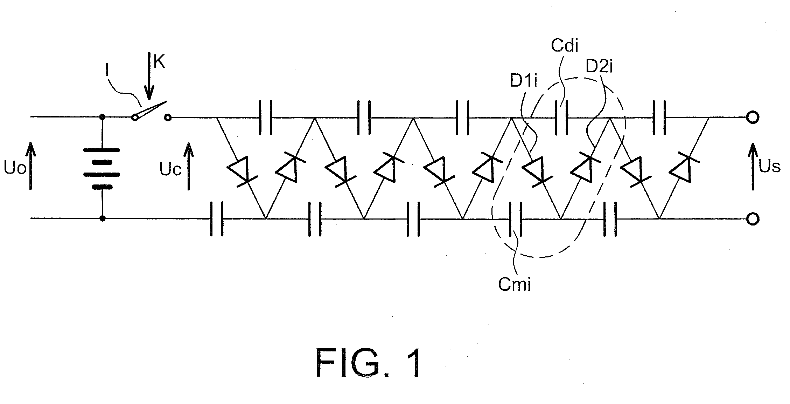

Le schéma électrique de principe d'une pompe de charges selon l'art connu est représenté en figure 1.

Une pompe de charges comprend un interrupteur I commandé par un signal K et n cellules identiques en série. Le nombre n est ici égal à 5. De façon générale, le nombre n est typiquement inférieur ou égal à 10. L'interrupteur I commute une tension d'alimentation continue $U_o$ pour former une tension commutée $U_c$. Chaque cellule décale le potentiel électrique entre son entrée et sa sortie d'une valeur de tension d'amplitude égale, en première approximation, à la valeur absolue $|U_o|$ de la tension d'alimentation $U_o$. Idéalement, la tension de sortie $U_s$ de la pompe de charges s'écrit :

$$U_s = n \times U_o$$

Une cellule de rang i (i=1, 2, ..., n) est constituée de deux commutateurs $D1_i$ et $D2_i$ et de deux capacités $Cd_i$ et $Cm_i$, la capacité $Cd_i$ servant à décaler la tension qui entre dans la cellule et la capacité $Cm_i$ servant à mémoriser cette tension. Chaque composant est soumis à une différence de potentiel égale au maximum à la tension d'alimentation $U_o$. Les commutateurs $D1_i$ et $D2_i$ sont généralement réalisés à l'aide de diodes. Les diodes permettent avantageusement une simplicité de mise en oeuvre car elles ne nécessitent pas de signal de commande. Selon certains modes de réalisation, toutefois, les commutateurs peuvent également être réalisés à l'aide d'interrupteurs.

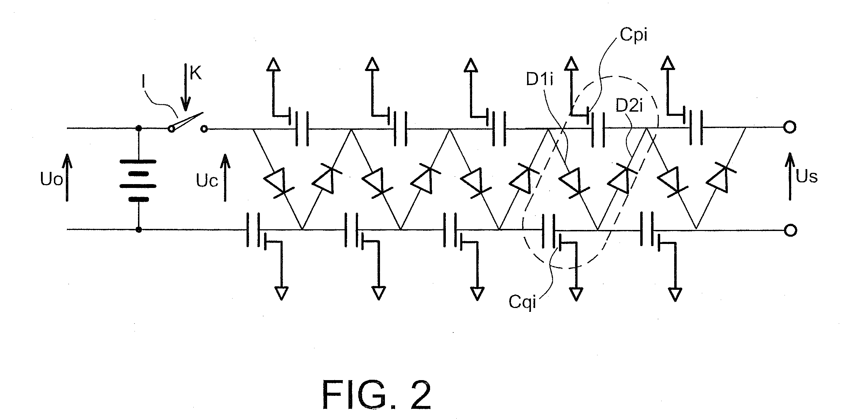

La figure 2 représente le schéma électrique réel de la pompe de charges dont le schéma de principe est donné en figure 1.

Les capacités $Cd_i$ et $Cm_i$ de la cellule de rang i présentent les capacités parasites respectives $Cq_i$ et $Cp_i$. Les capacités parasites $Cq_i$ et $Cp_i$ provoquent une perte des charges transmises à la cellule. Cette perte de charges conduit à fortement limiter la tension délivrée en sortie de la pompe de charges. Comme cela a été mentionné ci-dessus, le nombre maximal de cellules d'une pompe de charges selon l'art connu est typiquement inférieur ou égal à 10. Au-delà de 10 cellules, en effet, la perte de charges devient si importante qu'il n'est plus possible de concevoir une pompe de charges fonctionnant correctement.

L'invention ne présente pas ces inconvénients.

<u>Exposé de l'invention</u>

En effet, l'invention concerne une pompe de charges comprenant un bloc de n cellules en série, chaque cellule comprenant une capacité de décalage ($Cd_i$) et une capacité de mémorisation ($Cm_i$), la tension appliquée en entrée du bloc de n cellules étant une tension commutée ($U_c$) formée à partir d'une tension continue d'alimentation ($U_o$), la capacité de décalage ($Cd_i$) présentant une capacité parasite de décalage ($Cp_i$) formée entre une première armature de la capacité de décalage et un conducteur de référence et la capacité de mémorisation ($Cm_i$) présentant une capacité parasite de mémorisation ($Cq_i$) formée entre une première armature de la capacité de mémorisation et le conducteur de référence, les capacités parasites de décalage et de mémorisation conduisant à une perte de charges transmises à la cellule. Chaque cellule comprend des moyens d'injection de charges ($Cdinj_i$, $Cminj_i$), la quantité de charges injectées dans une cellule permettant de compenser, de façon partielle ou totale, ou de sur-compenser la quantité de charges perdues par la cellule.

Selon une première variante de l'invention, les moyens pour injecter des charges dans la cellule comprennent une capacité d'injection formée par une première électrode placée au-dessus d'une deuxième armature de la capacité de mémorisation, une tension égale à l'inverse de la tension commutée est appliquée sur la première électrode et une tension égale à la tension commutée est appliquée sur le conducteur de référence.

Selon une deuxième variante de l'invention, les moyens pour injecter des charges dans la cellule comprennent une capacité d'injection formée par une deuxième électrode placée au-dessus d'une deuxième armature de la capacité de décalage, une tension égale à k fois la tension commutée étant appliquée sur la deuxième électrode, k étant un nombre réel supérieur à 1, et une tension comprise entre 0V et n fois la tension d'alimentation étant appliquée sur le conducteur de référence.

Selon le mode de réalisation préférentiel de l'invention, la pompe de charges est réalisée en technologie silicium sur isolant, plus communément appelée technologie SOI (SOI pour « Silicon On Insulator »). Les capacités de décalage (Cdi) et de mémorisation (Cmi) sont alors réalisés sur une couche isolante qui est elle-même formée sur une tranche de silicium. Le conducteur de référence est alors constitué par la tranche de silicium qui est contact avec le substrat isolant.

Une pompe de charges selon l'invention permet avantageusement la réalisation de circuits électroniques de petites dimensions (typiquement quelques mm$^2$) et de rendement énergétique élevé.

Brève description des figures

D'autres caractéristiques et avantages de l'invention apparaîtront à la lecture d'un mode de réalisation préférentiel fait en référence aux figures jointes, parmi lesquelles :

- la figure 1 représente un schéma électrique de principe d'une pompe de charges selon l'art antérieur ;
- la figure 2 représente le schéma électrique réel de la pompe de charges dont le schéma électrique de principe est représenté en figure 1 ;
- la figure 3 représente une capacité de décalage et une capacité de mémorisation d'une pompe de charges réalisée en technologie silicium sur isolant ;
- la figure 4 représente un élément de structure de pompe de charges réalisée en technologie silicium sur isolant selon un premier mode de réalisation de l'invention ;
- la figure 5 représente un schéma électrique de pompe de charges selon le premier mode de réalisation de l'invention ;
- la figure 6 représente un schéma électrique d'une mise en cascade de pompes de charges selon le premier mode de réalisation de l'invention ;
- la figure 7 représente un schéma électrique de pompe de charges selon le premier mode de réalisation de l'invention, dans le cas où la tension continue à convertir est une tension négative ;
- la figure 8 représente un élément de structure de pompe de charges réalisé en technologie silicium sur isolant selon un deuxième mode de réalisation de l'invention ;
- la figure 9 représente un schéma électrique de pompe de charges selon le deuxième mode de réalisation de l'invention.

Sur toutes les figures, les mêmes repères désignent les mêmes éléments.

Description détaillée de modes de mise en oeuvre de l'invention

Les figures 1 et 2 ont été décrites précédemment, il est donc inutile d'y revenir.

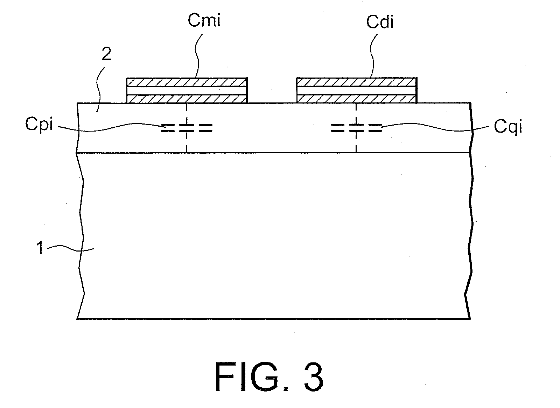

La figure 3 représente une capacité de mémorisation Cmi et une capacité de décalage Cdi réalisées en technologie silicium sur isolant, plus communément appelée technologie SOI pour « Silicon On Insulator ».

La technologie silicium sur isolant conduit à la formation de composants par diffusion de matériaux dopés sur une tranche de silicium (communément appelée « wafer »). Une diffusion de matériaux dopés est effectuée, par exemple, sur une épaisseur de 1μm dans une tranche de silicium de 500μm d'épaisseur. La partie active du composant se situe donc en surface de la tranche de silicium. Une couche isolante est intercalée entre la partie active du composant et la partie épaisse de la tranche de silicium également appelée face arrière ou « backface ».

En référence à la figure 3, les capacités Cmi et Cdi réalisées en technologie SOI sont placées sur une couche isolante 2, elle-même placée sur une face arrière 1. La face arrière 1 est une zone conductrice dont le potentiel est généralement un potentiel de référence pour le circuit. Par construction, la réalisation des capacités de mémorisation Cmi et de décalage Cdi s'accompagne de la présence des capacités parasites respectives Cpi et Cqi. La capacité parasite de mémorisation Cpi est formée par une armature de la capacité de mémorisation Cmi, la couche isolante 2 et la tranche de silicium 1. De même, la capacité parasite de décalage Cqi est formée par une armature de la capacité de décalage Cdi, la couche isolante 2 et la tranche de silicium 1.

La présence des capacités parasites Cpi et Cqi conduit à une perte des charges qui sont transmises à la cellule. Le phénomène de perte de charges, peu important s'il y a peu de cellules, devient très préjudiciable quand le nombre de cellules augmente.

Le rendement ρ qui mesure l'aptitude d'une cellule de capacité utile Cu à restituer des charges et que l'on définit, généralement, comme le rapport du nombre de charges sortantes sur le nombre de charges entrantes dans la cellule s'écrit :

$$\rho = (1-Cp/Cu),$$

où Cp est la capacité parasite associée à la capacité Cu, Cp ayant une valeur très inférieure à Cu. Le rendement ρ est donc généralement inférieur à 1.

La sensibilité du rendement de transfert vis-à-vis de la capacité parasite s'écrit :

$$d\rho/dCp = -1/Cu$$

Le principe de la pompe de charges, qui met en série n cellules identiques, implique que la tension $U_i$ fournie par la cellule de rang i est fonction de la tension $U_{i-1}$ de la cellule précédente de rang i-1, d'où l'expression :

$$U_i = \rho \times U_{i-1}$$

Pour multiplier n fois la tension d'alimentation Uo fournie à la première cellule dans une pompe de charges, n cellules en série sont nécessaires. La tension de sortie Us est alors la somme de toutes les tensions élémentaires, soit :

$$Us = \Sigma_1^n Ui,$$

ou encore

$$Us = \rho.Uo + \rho^2.Uo + .. + \rho^n.Uo,$$

ou encore

$$Us = (\rho - \rho^{n+1}) / (1-\rho).Uo,$$

et donc

$$Us = \eta \times Uo$$

La tension d'alimentation Uo est donc multipliée par le coefficient η tel que :

$$\eta = (\rho - \rho^{n+1}) / (1-\rho),$$

le coefficient η étant inférieur au nombre n de cellules. Il vient donc :

$$Us < n \times Uo$$

Ainsi, par exemple, une pompe de 20 cellules de rendement unitaire 0,95 ne permet-elle pas d'envisager une multiplication de tension supérieure à 12 fois la tension d'alimentation.

Pour une application haute tension devant délivrer, par exemple, une tension de 500V à partir d'une tension d'alimentation Uo de 2, 5V, 200 cellules sont théoriquement nécessaires. Les capacités parasites représentant environ 2% de la capacité utile, le rendement unitaire ρ s'écrit alors :
ρ = 0,98

La valeur de la tension de sortie est alors Us telle que :

$$Us = 48 \times 2,5 \text{ V},$$

soit
Us = 120V,

ce qui est très éloigné de la valeur voulue.

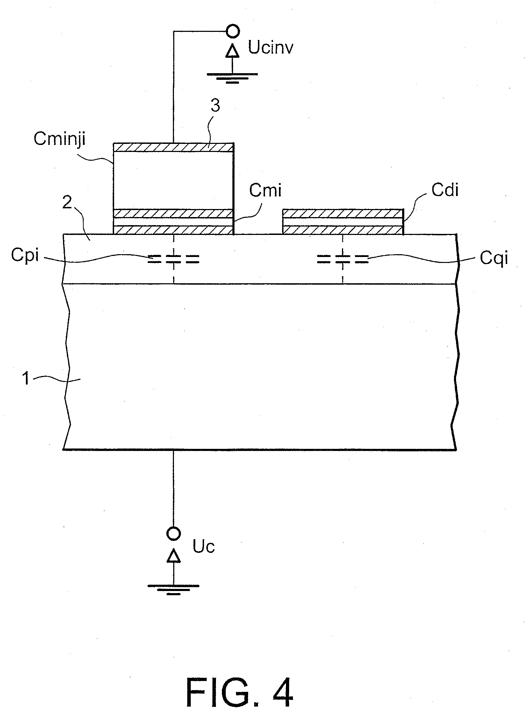

Une pompe de charges selon l'art connu n'est donc pas apte à délivrer une tension élevée. Des modifications de la structure sont nécessaires. La figure 4 représente un premier type de modification de structure de pompe de charges réalisée en technologie silicium sur isolant selon l'invention.

Un écran métallique 3 (électrode) est placé au-dessus de la capacité mémoire Cmi, qui se trouve alors comprise entre l'écran métallique 3 et la face arrière 1. Une tension d'alimentation Ucinv égale à l'inverse de la tension commutée Uc est appliquée à l'écran métallique 3, alors que la tension commutée Uc est elle-même appliquée à la face arrière 1.

L'écran 3 ainsi alimenté permet d'échanger des charges avec la capacité Cmi. Cet échange de charges se traduit, entre l'électrode 3 et la capacité Cmi, par une injection de charges opposée à la perte de charges qui s'effectue entre la capacité Cmi et la face arrière.

L'électrode 3 et l'armature de la capacité Cmi en regard de l'électrode 3 définissent une capacité d'injection Cminji. La quantité de charges injectées peut compenser partiellement ou totalement, voire sur-compenser, la quantité de charges perdues. Une compensation totale entre perte de charges et injection de charges est obtenue lorsque la condition suivante est réalisée :

$$Cminji = Cmi$$

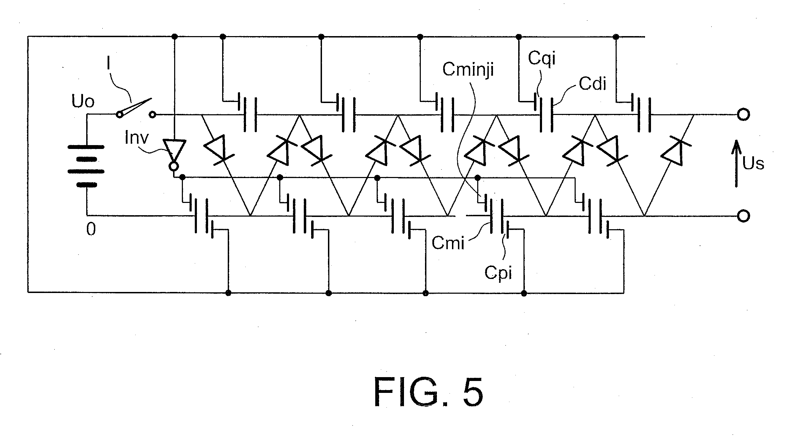

La figure 5 représente un schéma électrique d'une pompe de charges selon le premier mode de réalisation de l'invention. Un inverseur Inv reçoit sur son entrée la tension commutée Uc et délivre une tension commutée inversée Ucinv. La tension commutée inversée Ucinv est appliquée sur les capacités d'injection Cminji (i=1, 2, ..., n) alors que la tension commutée Uc est appliquée sur la face arrière.

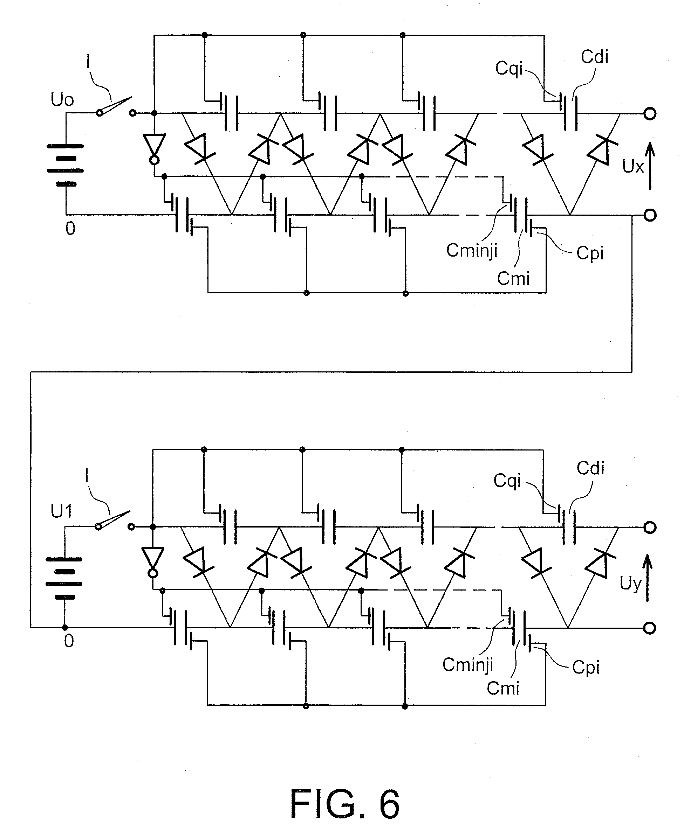

La figure 6 représente un schéma électrique d'une mise en cascade de deux pompes de charges réalisées selon le premier mode de réalisation de l'invention. Une première pompe de charges commute une première basse tension continue Uo et une deuxième pompe de charges commute une deuxième basse tension continue U1. La première pompe de charges délivre, par exemple, une tension continue Ux égale à 1000V et la deuxième pompe de charges délivre une tension continue Uy égale à 500V. L'association des deux pompes de charges conduit alors à l'obtention d'une tension sensiblement égale à 1500V à partir de la tension Uo égale, par exemple, à 2,5V.

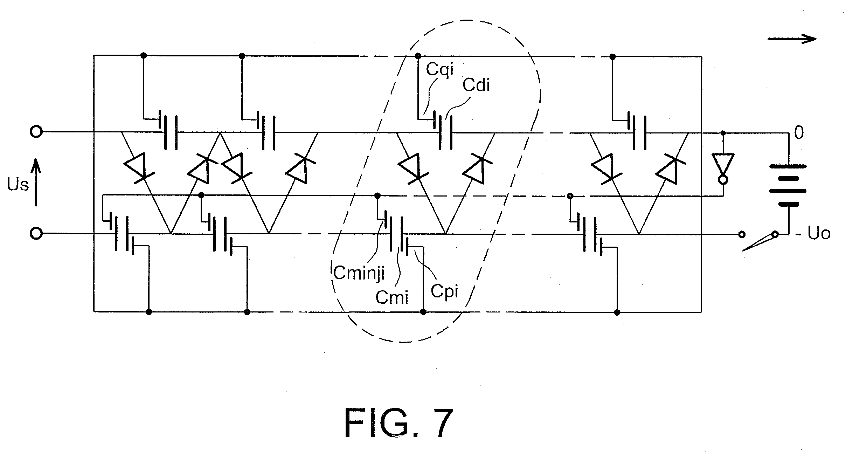

La figure 7 représente un schéma électrique d'une pompe de charges selon le premier mode de réalisation de l'invention, dans le cas où la tension continue à convertir est une tension négative.

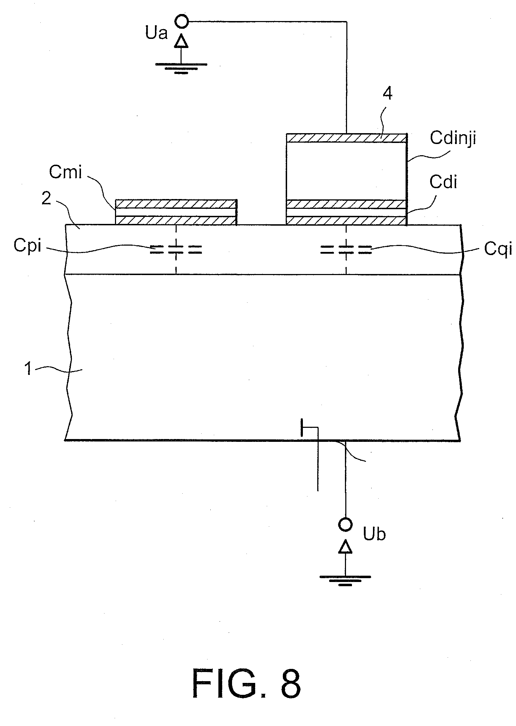

La figure 8 représente un élément de structure de pompe de charges réalisée en technologie silicium sur isolant selon un deuxième mode de réalisation de l'invention.

Un écran métallique 4 (électrode) est placé au-dessus de la capacité de décalage Cdi qui se trouve alors comprise entre l'écran métallique 4 et la face arrière 1 . Une tension d'alimentation Ua est appliquée à l'écran métallique 4 et une tension d'alimentation Ub est appliquée à la face arrière 1. La tension Ua est une tension égale à k fois la tension commutée Uc, k étant un nombre réel supérieur à 1. La tension Ua peut ainsi, par exemple, être délivrée, à partir de la tension Uc, par un amplificateur de gain supérieur à 1 ou encore être une tension prise sur un noeud de l'une des cellules de la pompe de charges, k étant alors un entier supérieur ou égal à 2. La tension Ub est une tension continue comprise entre 0V et n x Uo.

L'écran 4 ainsi alimenté permet alors d'échanger des charges avec la capacité Cdi. Cet échange de charges se traduit par une injection de charges, entre l'électrode 4 et la capacité Cdi, opposée à la perte de charges entre la capacité Cdi et la face arrière.

L'électrode 4 et l'armature de la capacité Cdi en regard de l'électrode 4 définissent une capacité d'injection Cdinji. Ici aussi, la quantité de charges injectées peut compenser partiellement ou totalement la quantité de charges perdues. Une compensation totale entre perte de charges et injection de charges est obtenue lorsque la condition suivante est réalisée :

$$Cdinji = Cdi$$

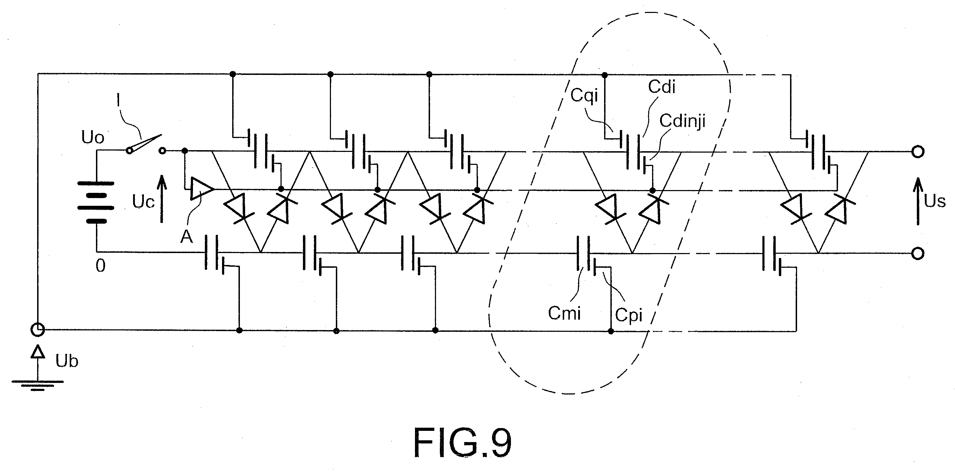

La figure 9 représente un exemple de schéma électrique d'une pompe de charges réalisée selon le deuxième mode de réalisation de l'invention. Un amplificateur A reçoit sur son entrée la tension commutée Uc et délivre une tension commutée amplifiée égale à k x Uc. La tension commutée amplifiée est appliquée sur les capacités d'injection Cdinji (i=1, 2, ..., n).

Il a été mentionné plus haut que la quantité de charges injectées peut compenser partiellement ou totalement la quantité de charges perdues. Avantageusement, quel que soit le mode de réalisation de l'invention, il est également possible de réaliser une surcompensation de la perte de charges par injection de plus de charges qu'il n'en est perdu, par exemple pour compenser les pertes par effet Joule. La tension fournie en sortie de la pompe de charges peut alors être supérieure à n fois la tension d'alimentation Uo. Le rendement de transfert ρ s'écrit alors :

$$\rho = 1 - (Cp\text{-}Ci) / Cu,$$

où Ci représente la capacité d'injection (Cminji, Cdinji) et Cu la capacité parasite (Cpi, Cqi).

Dans le cas où Ci = Cp (cas de la compensation totale), le rendement est égal à 1 et la tension de sortie Us s'écrit simplement :

$$Us = n \text{ x } Uo$$

De façon générale, selon l'invention, la tension Us peut avantageusement être ajustée par le seul dessin des couches technologiques de la capacité d'injection Ci (Cminji, Cdinji).

Par ailleurs, supposons une erreur ε sur une capacité d'injection Ci. Il vient donc :

$$Ci = (1+\varepsilon) \text{ x } Cp$$

La sensibilité du rendement de transfert vis-à-vis de la capacité parasite s'écrit alors :

$$d\rho / dCp = d (1 - (Cp\text{-}Ci) / Cu) / dCp,$$

soit

$$d (1 + (\varepsilon.Cp) / Cu) / dCp = \varepsilon/Cu$$

Il s'ensuit que la sensibilité du rendement d'une pompe de charges selon l'invention est avantageusement ε fois plus faible que la sensibilité d'une pompe de charges selon l'art antérieur. Cette caractéristique présente avantageusement une incidence favorable sur le rendement énergétique global de la pompe de charges.

## Revendications

**1.** Pompe de charges comprenant un bloc de n cellules en série, chaque cellule comprenant une capacité de décalage (Cdi) et une capacité de mémorisation (Cmi), la tension appliquée en entrée du bloc de n cellules étant une tension commutée (Uc) formée à partir d'une tension continue d'alimentation (Uo), la capacité de décalage (Cdi) présentant une capacité parasite de décalage (Cpi) formée entre une première armature de la capacité de décalage et un conducteur de référence et la capacité de mémorisation (Cmi) présentant une capacité parasite de mémorisation (Cqi) formée entre une première armature de la capacité de mémorisation et le conducteur de référence, les capacités parasites de décalage et de mémorisation conduisant à une perte de charges transmises à la cellule, **caractérisée en ce que** chaque cellule comprend des moyens d'injection de charges (Cdinji, Cminji), la quantité de charges injectées dans une cellule permettant de compenser, de façon partielle ou totale, ou de surcompenser la quantité de charges perdues par la cellule.

2. Pompe de charges selon la revendication 1, **caractérisée en ce que** les moyens pour injecter des charges dans la cellule comprennent une capacité d'injection (Cminji) formée une première électrode (3) placée au-dessus d'une deuxième armature de la capacité de mémorisation (Cmi), **en ce qu'**une tension égale à l'inverse (Ucinv) de la tension commutée (Uc) est appliquée sur la première électrode (3) et **en ce qu'**une tension égale à la tension commutée (Uc) est appliquée sur le conducteur de référence.

3. Pompe de charges selon la revendication 2, **caractérisée en ce qu'**elle comprend un inverseur (Inv) dont l'entrée est reliée à la tension commutée (Uc) et dont la sortie est reliée à l'ensemble des premières électrodes (3) des n cellules.

4. Pompe de charges selon la revendication 1, **caractérisée en ce que** les moyens pour injecter des charges dans la cellule comprennent une capacité d'injection (Cdinji) formée par une deuxième électrode (4) placée au-dessus d'une deuxième armature de la capacité de décalage (Cdi), **en ce qu'**une tension égale à k fois la tension commutée (Uc) est appliquée sur la deuxième électrode (4), k étant un nombre réel supérieur à 1, et **en ce qu'**une tension (Ub) comprise entre 0V et n fois la tension d'alimentation (Uo) est appliquée sur le conducteur de référence.

5. Pompe de charges selon la revendication 4, **caractérisée en ce que** les deuxièmes électrodes (4) des n cellules sont reliées à un même noeud d'une cellule de la pompe de charges sur lequel est appliquée une tension égale à m fois la tension commutée (Uc), m étant un entier supérieur ou égal à 2.

6. Pompe de charges selon la revendication 4, **caractérisée en ce qu'**elle comprend un amplificateur (A) de gain supérieur à 1 dont l'entrée est reliée à la tension commutée (Uc) et dont la sortie est reliée à l'ensemble des deuxièmes électrodes des n cellules.

7. Pompe de charges selon l'une quelconque des revendications précédentes, **caractérisée en ce qu'**elle est réalisée en technologie silicium sur isolant de sorte que les capacités de décalage (Cdi) et de mémorisation (Cmi) sont réalisées sur une couche isolante (2) qui est formée sur une tranche de silicium (1) constituant le conducteur de référence, la capacité parasite de décalage (Cqi) étant formée par une armature de la capacité de décalage, la couche isolante (2) et la tranche de silicium (1) et la capacité parasite de mémorisation (Cpi) étant formée par une armature de la capacité de mémorisation, la couche isolante (2) et la tranche de silicium (1) .

FIG. 1

FIG. 2

EP 1 398 866 A1

FIG. 3

FIG. 4

FIG. 5

FIG. 6

FIG. 7

Ua

4

Cdinji

Cmi

2

Cdi

Cpi

Cqi

1

Ub

# FIG. 8

FIG.9

EP 1 398 866 A1

**Office européen**

**des brevets**

## RAPPORT DE RECHERCHE EUROPEENNE

Numéro de la demande

EP 03 10 2738

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 691 729 A (SGS-THOMSON MICROELECTRONICS) 10 janvier 1996 (1996-01-10) * abrégé * * figure 3 * | 1 | H02M3/07 |
| A | US 6 320 796 B1 (THART FAH VOO ET AL.) 20 novembre 2001 (2001-11-20) * figure 3 * * colonne 3, ligne 7 - ligne 59 * | 1 | |
| A | US 3 513 376 A (G.D.HAJEK) 19 mai 1970 (1970-05-19) * colonne 2, ligne 19 - ligne 37 * | 1 | |
| A | PATENT ABSTRACTS OF JAPAN vol. 012, no. 239 (E-630), 7 juillet 1988 (1988-07-07) & JP 63 028268 A (TOSHIBA CORP.), 5 février 1988 (1988-02-05) * abrégé * | 1 | |
| A | PATENT ABSTRACTS OF JAPAN vol. 2000, no. 19, 5 juin 2001 (2001-06-05) & JP 2001 037211 A (KAWASHIMA HIROSHI), 9 février 2001 (2001-02-09) * abrégé * | 1 | DOMAINES TECHNIQUES RECHERCHES (Int.Cl.7) H02M |
| A | US A (GORAN MARNFELDT) * abrégé * * colonne 1, alinéa 3 - alinéa '0005! * | 1 | |

Le présent rapport a été établi pour toutes les revendications

| Lieu de la recherche | Date d'achèvement de la recherche | Examinateur |
|---|---|---|
| La Haye | 16 octobre 2003 | Lund, M. |

EPO FORM 1503 03.82 (P04C02)

**EP 1 398 866 A1**

## ANNEXE AU RAPPORT DE RECHERCHE EUROPEENNE
## RELATIF A LA DEMANDE DE BREVET EUROPEEN NO.

EP 03 10 2738

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

16-10-2003

| Document brevet cité au rapport de recherche | Date de publication | Membre(s) de la famille de brevet(s) | | Date de publication |
|---|---|---|---|---|
| FP 0691729 A | 10-01-1996 | EP<br>JP<br>US | 0691729 A2<br>8088967 A<br>5717581 A | 10-01-1996<br>02-04-1996<br>10-02-1998 |
| US 6320796 B1 | 20-11-2001 | AUCUN | | |
| US 3513376 A | 19-05-1970 | FR<br>JP | 1594807 A<br>50013927 B | 08-06-1970<br>23-05-1975 |
| JP 63028268 A | 05-02-1988 | AUCUN | | |
| JP 2001037211 A | 09-02-2001 | AUCUN | | |
| US 20010431114 A | | AUCUN | | |

EPO FORM P0460

Pour tout renseignement concernant cette annexe : voir Journal Officiel de l'Office européen des brevets, No.12/82

17